# EUROPEAN PATENT SPECIFICATION

(11) **EP 0 805 402 B1**
(45) Date of publication and mention of the grant of the patent: **07.08.2002**
(21) Application number: 97106582.6
(22) Date of filing: 21.04.1997
(51) Int. Cl.: G06F 17/28, G06F 17/30, G06F 17/21

(54) **Document conversion system for processing typographie effects**
Dokumentumsetzungssystem zum Bearbeiten von typographischen Effekten
Système de conversion de document pour le traitement d'effets typographiques

(30) Priority: 30.04.1996 JP 10909396; 30.04.1996 JP 10910096
(43) Date of publication of application: 05.11.1997
(73) Proprietor: Oki Electric Industry Co., Ltd., Tokyo (JP)
(72) Inventor: Sugio, Toshiyuki, 7-12, Toranomon 1-chome, Minato-ku Tokyo (JP)
(74) Representative: Kirschner, Klaus Dieter, Dipl.-Phys.

(56) References cited:
- EP-A- 0 370 778
- US-A- 4 964 030
- US-A- 5 361 205
- PATENT ABSTRACTS OF JAPAN vol. 017, no. 267 (P-1543), 25 May 1993 & JP 05 006396 A (TOSHIBA CORP), 14 January 1993
- "HYPERMEDIA TRANSLATION TOOL" IBM TECHNICAL DISCLOSURE BULLETIN, vol. 34, no. 10B, 1 March 1992, pages 198-199, XP000302682

## Description

### BACKGROUND OF THE INVENTION

The present invention relates to a method and apparatus for converting electronic documents having embedded information specifying typographical effects, to enable machine translation or other natural-language processing of the electronic documents.

Electronic documents, also referred to as on-line documents, are stored in the memory of a computer, or in a data storage device connected to a computer, and comprise codes designating alphanumeric characters, or other characters. Many electronic documents also have embedded tags specifying typographical effects such as underlining and italics, which appear when the document is displayed or printed. These so-called tagged documents conform to different tagging schemes; three currently well-known schemes are the standard generalized markup language (SGML), the hypertext markup language (HTML), and the TeX scheme. A tag is typically a character string consisting of a mixture of alphanumeric characters and symbols, in some cases including control codes that are not usually considered to be part of the alphanumeric character set.

Other electronic documents contain embedded control codes or so-called escape sequences that are meaningful to a particular word-processing program or a particular manufacturer's output device. Although these electronic documents are not referred to as tagged documents, they are similar to tagged documents in having embedded information specifying typographical effects.

The proliferation of computer networks and the growth of internets have greatly increased the accessibility of electronic documents. As computer networks are now linked world-wide, network users often retrieve documents in a foreign language that they cannot easily read, or cannot read at all. The latter is often the case when a non-Japanese user retrieves a Japanese document, for example. To get an idea of the content of the document, without incurring the expense and delay of human translation, the user may attempt to have the document translated by a machine translation system.

A problem arises if the document is a tagged document, because conventional machine translation systems are natural-language processing systems, and are not designed to process tags correctly. Consider, for example, the following English sentence in which the words 'He is' are underlined for emphasis:

He is president of our company.

In a tagged document, this sentence might be rendered as follows, where <U> is a tag meaning to start underlining and </U> is a tag meaning to stop underlining.

<U>He is</U> president of our company.

A certain machine translation system translates the natural-language content of this sentence into a Japanese sentence with the following romanized representation.

Kare wa wareware no kaisha no purejidento de aru.

The Japanese word 'kare' means 'he,' and 'de aru' means 'is.' Two words which were consecutive in the English sentence thus appear at opposite ends of the Japanese sentence. When the tagged version of this English sentence was translated by the same machine translation system, the resulting tagged Japanese sentence and its printed or displayed output were:

<U>Kare wa wareware no</U> kaisha no purejidento de aru.

Kare wa wareware no kaisha no purejidento de aru.

The system treated 'Kare wa' as one word (meaning 'he') and 'wareware no' as another word (meaning 'our'), and left the <U> and </U> tags in the same positions in the Japanese sentence as occupied in the English sentence, before the first word and after the second word. As a result, unintended emphasis was given to the Japanese expression meaning 'our,' and intended emphasis was left missing from the expression meaning 'is.'

One conceivable solution to this problem is a preprocessing and post-processing system that removes the tags from a tagged document before machine translation, then reinserts the tags into the translated document, keeping the tags adjacent to the translations of the words they were adjacent to in the original document. When this proposed solution is applied to the sentence given above, however, the result is:

<U>Kare wa wareware no kaisha no purejidento de aru.</U>

Kare wa wareware no kaisha no purejidento de aru.

The tags are re-inserted before the word meaning 'he' and after the words meaning 'is,' so the entire Japanese sentence is underlined, which was not the intended effect.

Problems like this occur frequently when tags are embedded in the middle of a sentence. The typographical effect produced in the translation does not correspond correctly to the typographical effect in the source document, and sometimes the effect on the translation is ludicrous. The problem becomes troublesome when, for example, typographical effects are used to highlight key words for indexing purposes, or to mark hypertext links to other electronic documents.

Problems like the above are not restricted to machine translation. They can occur when any type of natural-language processing re-arranges the word order or otherwise alters a tagged document.

Another reason for the failure of simple tag removal and re-insertion in the machine translation of tagged documents is the different typography of the source language and target language. For example, there are no italics in Japanese, so it does little good to re-insert italicization tags into an electronic document that is translated from English into Japanese. Furthermore, the use of boldface is generally avoided in Japanese, because many Japanese characters have complex shapes with fine lines that are easily obscured by thickening. Where boldface or italic characters are found in English sentences, the common Japanese practice is to use underlines or quotation marks.

The above-described problems also occur in the natural-language processing of electronic documents with embedded control codes or escape sequences, instead of embedded tags. From the US-A-5 361 205, a translation system is known in which typographical information is recognized during the decomposition of a document into information units by a first morpheme analysis unit using both a typographical designation morpheme dictionary and an ordinary lingual morpheme dictionary. This system uses a typographical roll-out process that first converts a document with typographical tags inserted in and around morphemes to a document with equivalent attribute information attached to individual characters, this process being skipped if the typographical information was already in character attribute form in the original document.

A general object of the present invention is accordingly to enable correct natural-language processing of electronic documents with embedded information specifying typographical effects.

A more specific object is to enable correct machine translation of such electronic documents.

Another object is to convert typographic effects suitable in the source language of a machine translation system to typographic effects suitable in the target language.

The invented method of converting an electronic document begins by decomposing the electronic document into units of information. These units include both words or other units of natural-language information, and units of information specifying typographical effects.

The units of information specifying typographical effects are next converted so that each unit pertains to only one natural-language unit. Additional units of information specifying typographical effects may be generated as necessary for this purpose. Following this conversion, the units of information specifying typographical effects are concealed by, for example, being moved into a separate file, or being converted to attributes of the natural-language units.

Natural-language processing is then carried out on the units of natural-language information. During this processing, the typographical effects and the units of information specifying them are hidden from the view of the natural-language processing system.

Finally, units of information specifying typographical effects are restored to the electronic document resulting from natural-language processing, on a unit-by-unit basis. If this step leaves redundant units of information specifying typographical effects, the redundant units are preferably removed.

### BRIEF DESCRIPTION OF THE DRAWINGS

In the attached drawings:
FIG. 1 is a block diagram illustrating a machine translation according to a first embodiment of the invention;
FIG. 2 illustrates a tag identification information table stored in the control memory in FIG. 1;
FIG. 3 illustrates a tag conversion and restoration rule table stored in the control memory in FIG. 1;
FIG. 4 illustrates a tag information table stored in the tag memory in FIG. 1;
FIG. 5 is a flowchart illustrating the operation of the tag converter in FIG. 1;
FIG. 6 illustrates a morphemic tree received by the tag converter;
FIG. 7 illustrates a converted morphemic tree output by the tag converter;
FIG. 8 is a flowchart illustrating the operation of the tag concealer in FIG. 1;
FIG. 9 illustrates a morphemic tree output by the tag concealer;
FIG. 10 illustrates the Japanese morphemic tree resulting from machine translation of the morphemic tree in FIG. 9;
FIG. 11 is a flowchart illustrating the operation of the tag restorer in FIG. 1;
FIG. 12 illustrates a Japanese morphemic tree output by the tag restorer;
FIG. 13 is a block diagram illustrating a machine translation according to a second embodiment of the invention;
FIG. 14 illustrates a tag differentiation and integration rule table stored in the control memory in FIG. 13;
FIG. 15 is a flowchart illustrating the operation of the tag differentiator in FIG. 13;
FIG. 16 illustrates a morphemic tree received by the tag differentiator;
FIG. 17 illustrates a morphemic tree output by the tag differentiator;
FIG. 18 illustrates the Japanese morphemic tree resulting from machine translation of the morphemic tree in FIG. 17;
FIG. 19 is a flowchart illustrating the operation of the tag integrator in FIG. 13; and
FIG. 20 illustrates a Japanese morphemic tree output by the tag integrator.

### DETAILED DESCRIPTION OF THE INVENTION

Two embodiments of the invention will be described with reference to the attached illustrative drawings. In both embodiments, the invention is applied to the machine translation of tagged documents from English to Japanese. Both embodiments are useful in machine translation systems that operate in a variety of computing environments, including, for example, workstations and personal computers. Detailed descriptions of the many possible computer hardware configurations will be omitted, to avoid obscuring the invention with irrelevant detail.

In the descriptions of the embodiments, Japanese words will continue to be given in their romanized spellings, but the drawings will show the Japanese characters as they would be seen by a Japanese user.

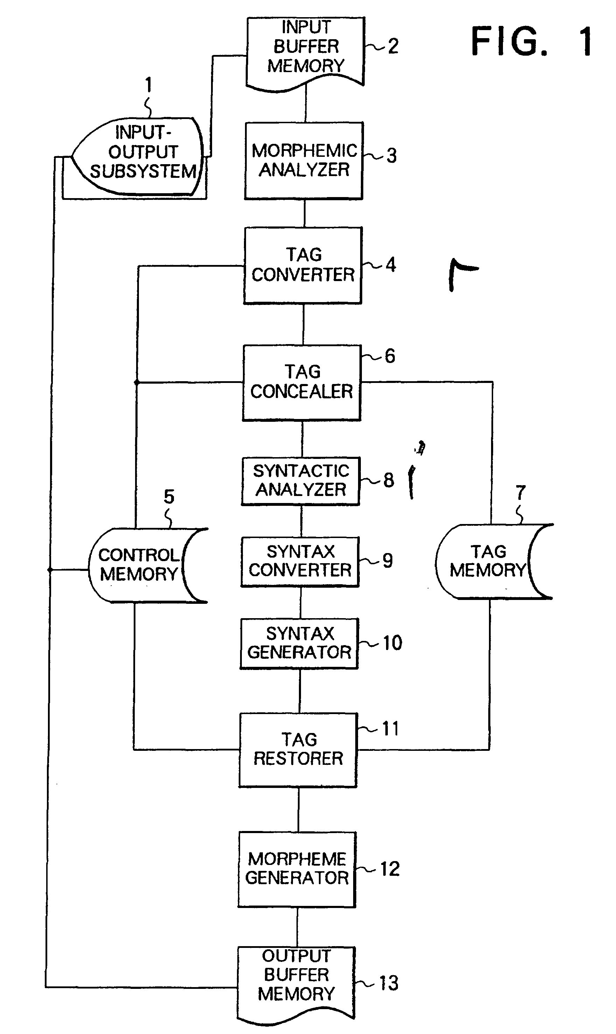

Referring to FIG. 1, the machine translation system of the first embodiment comprises an input-output subsystem 1, an input buffer memory 2, a morphemic analyzer 3, a tag converter 4, a control memory 5, a tag concealer 6, a tag memory 7, a syntactic analyzer 8, a syntax converter 9, a syntax generator 10, a tag restorer 11, a morpheme generator 12, and an output buffer memory 13. The input buffer memory 2, control memory 5, tag memory 7, and output buffer memory 13 comprise, for example, semiconductor memory devices, or magnetic or optical disk devices, or parts thereof. The other elements in FIG. 1 comprise suitable combinations of computing hardware and software.

The input-output subsystem 1 comprises, for example, a keyboard, pointing device, display screen, printer, external memory units, and devices for communicating with other computers or computer networks.

The input buffer memory 2 stores a tagged English electronic document, which will be referred to below as the input text. The output buffer memory 13 stores a tagged Japanese electronic document, which will be referred to below as the output text.

The morphemic analyzer 3 decomposes the input text into morphemes, some of which are natural-language morphemes (English words, for example) and others of which are tag morphemes. The result is a morphemic tree, which is processed first by the tag converter 4, then by the tag concealer 6. The tag concealer 6 returns a morphemic tree from which the tags have been removed.

The syntactic analyzer 8 performs a syntactic analysis on the morphemic tree obtained from the tag concealer 6, and converts the structure of this tree to an English syntactic tree structure. The syntax converter 9 converts the resulting English syntactic tree to a corresponding Japanese syntactic tree. The syntax generator 10 receives the Japanese syntactic tree and generates a Japanese morphemic tree, which is passed to the tag restorer 11. The morpheme generator 12 generates the output text from a tagged morphemic tree received from the tag restorer 11.

The morphemic analyzer 3, syntactic analyzer 8, syntax converter 9, syntax generator 10, and morpheme generator 12 are well-known machine-translation facilities, and are present in many conventional machine translation systems. The following description will focus on the tag converter 4, control memory 5, tag concealer 6, tag memory 7, and tag restorer 11, which are the novel elements of the first embodiment.

The tag converter 4 identifies tags in the morphemic tree output by the morphemic analyzer 3, and converts certain types of tags as will be described below, referring to information stored in the control memory 5. The resulting morphemic tree with converted tags is supplied to the tag concealer 6.

The control memory 5 stores tag identification information and tag conversion and restoration rules. The control memory 5 is read by the tag converter 4, the tag concealer 6, and the tag restorer 11.

In the first embodiment, the contents of the control memory 5 can also be edited by a human user, using facilities provided by the input-output subsystem 1 in FIG. 1. This feature enables the user to alter the first embodiment to suit different tagging schemes found in different electronic documents, or to suit the user's preferences or requirements. The resulting flexibility enables the first embodiment to be used for a wide variety of purposes, not necessarily limited to machine translation, as will be described later.

The tag concealer 6 extracts the tags from the morphemic tree output by the tag converter 4, stores these tags in the tag memory 7, and passes a tag-free morphemic tree to the syntactic analyzer 8. In extracting tags, the tag concealer 6 refers to the tag identification information stored in the control memory 5.

The tag memory 7 stores not only the tags extracted by the tag concealer 6, but also information connecting each stored tag to a specific morpheme in the morphemic tree output by the tag concealer 6, enabling the tag restorer 11 to restore the tags later.

The tag restorer 11 restores the tags stored in the tag memory 7 to the morphemic tree output by the syntax generator 10, then removes redundant tags and supplies the resulting morphemic tree with tags to the morpheme generator 12. In removing redundant tags, the tag restorer 11 refers to restoration rules stored in the control memory 5.

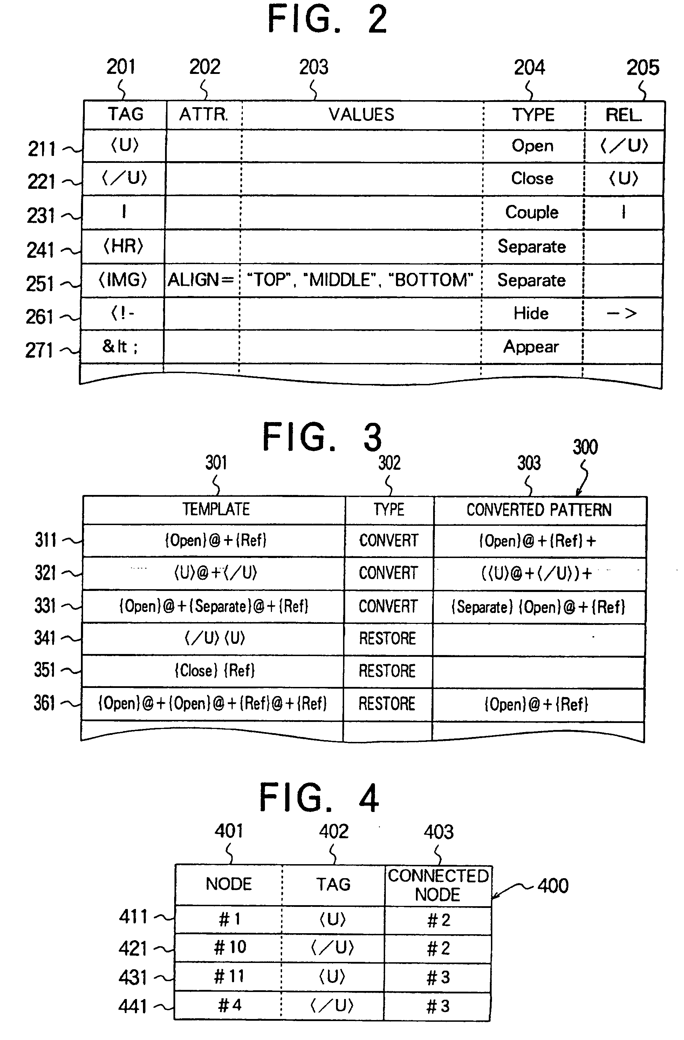

Referring to FIG. 2, the tag identification information in the control memory 5 is stored in a table format. FIG. 2 shows an example in which the tag identification information table 200 comprises seven records 211, 221, 231, 241, 251, 261, and 271, each record having a tag field 201, an attribute name field 202, an attribute value field 203, a tag type field 204, and a related tag field 205. The attribute name field 202, attribute value field 203, and related tag field 205 may be empty, as in the fourth record 241.

The tag field 201 contains a character string by which a specific tag can be recognized. For example, the character string <U> that denotes the start of underlining is stored in the tag field of the first record 211, and a character string <IMG> denoting image insertion is stored in the tag field of the sixth record 261. Depending on the tagging scheme, the tag field 201 may contain control codes as well as alphanumeric characters.

The attribute name field 202 and attribute value field 203 describe attribute information that may accompany the character-string or control-code information appearing in the tag field 201. For example, the sixth record 261 indicates that the <IMG> tag may have an alignment attribute (ALIGN=) designating top, bottom or middle alignment. The <IMG> tag thus might appear in the form IMG ALIGN="TOP" in the input text.

The tag type field 204 classifies the tag. The tags in tagged documents can broadly be classified as tags that function in relation to other tags, and tags that function alone. In the example in FIG. 2, tags that function in relation to other tags are further classified as being of the Open, Close, Couple, or Hide type, and tags that function alone are further classified as being of the Separate or Appear type. Although the classification scheme depends on the tagging scheme used in the tagged document, the tag types illustrated in FIG. 2 cover the most common cases. The tag converter 4, tag concealer 6, and tag restorer 11 process each type of tag in a different way.

Open and Close tags (referred to below as opening and closing tags) are paired in the way that left and right parentheses are paired, and may have a nested structure. Couple tags are also paired, but with no explicit distinction between opening and closing tags. At each appearance of a Couple tag, the corresponding typographical effect toggles between the on and off states. Couple tags do not form nested structures.

Separate tags are treated as delimiters, the text preceding the tag being separated from the text following the tag. Translation or other natural-language processing must not move text from one side of a Separate tag to the other side. Hide tags designate comment lines or other matter that is to be hidden from the natural-language processing. Appear tags designate comments or other matter that is not to be hidden from the natural-language processing: for example, comment lines that are to be translated.

When the tag type field 204 designates a type of tag that functions in relation to another tag (the Open, Close, Couple, or Hide type in FIG. 2), the related tag field 205 identifies the other tag. The first two records 221 and 231, for example, indicate that <U> functions in relation to </U> and vice versa.

Referring to FIG. 3, the tag conversion and restoration rules are also stored in a table format. The tag conversion and restoration rule table 300 comprises six records 311, 321, 331, 341, 351, and 361, each having a template field 301, a type field 302, and a converted pattern field 303. Each record describes one rule to be followed by the tag converter 4 or tag restorer 11.

The template field 301 specifies a tag pattern to be recognized by the tag converter 4 or tag restorer 11 in the relevant morphemic tree. Tags may be designated by their type, as in the first record 311, or by their identifying character strings, as in the second record 312. An at-sign (@) designates an arbitrary morpheme. A plus-sign (+) designates an arbitrary number of repetitions. The notation {Ref} designates the tag given in the related tag field 205 of the tag identification information table 200. In the first record 311, {Open}@+{Ref} describes an opening tag, followed by an arbitrary number of morphemes, then by the tag to which the opening tag is related. The second record 321 gives a specific instance of this template, in which the opening tag is <U> and the related tag is </U>.

The type field 302 indicates whether each rule is to be applied by the tag converter 4 or the tag restorer 11.

The converted pattern field 303 instructs the tag converter 4 or tag restorer 11 to convert a tag pattern matching the template in the template field 301 to a different pattern. The same notation is used as in the template field. In the first record 311, ({Open}@{Ref})+ describes an opening tag followed by a single morpheme, then by the related tag, this sequence being repeated an arbitrary number of times.

The first record 311 thus tells the tag converter 4 to convert a pattern in which an opening tag is followed by two or more morphemes, then by the related tag, to a pattern in which each morpheme is immediately preceded by the opening tag and immediately followed by the related tag. The second record 321 gives this rule for the specific case of the underlining tags <U> and </U>. The third record 331 tells the tag converter 4 that when a tag of the Separate tag is enclosed, together with an arbitrary number of morphemes, between an opening tag and the related (closing) tag, the tag of the Separate type is to be moved to a new location just before the opening tag.

The fourth record 341 tells the tag restorer 11 that when a </U> is immediately followed by a <U> tag, both tags are to be deleted. The fifth record 351 generalizes this rule to the case of any closing tag immediately followed by its related (opening) tag. The sixth record 361 tells the tag restorer 11 that when two pairs of opening and closing tags are nested, the inner pair should be removed.

The second record 321 and fourth record 341 are shown in FIG. 3 for explanatory purposes. In practice, these records would be unnecessary, since the rules they describe are more generally described by the first record 311 and fifth record 351.

Referring to FIG. 4, tag information is also stored in the tag memory 7 in a table format. The tag information table 400 shown in FIG. 4 comprises four records 411, 412, 413, and 414, each having a tag node field 401, a tag field 402, and a connected node field 403. The tag node field 401 and connected node field 403 contain the node numbers of nodes in a morphemic tree. The tag field 402 contains one complete tag as it appeared in the morphemic tree. The first record 411, for example, indicates that node #1 in the morphemic tree is a <U> tag, which is connected to node #2 in the morphemic tree.

The tag information table 400 is a temporary storage area for records that are generated during the processing of the input text, and are deleted when the processing is finished. The number of records and their contents are not fixed, but depend on the input text.

The operation of the first embodiment will now be described, focusing on the operations of the tag converter 4, tag concealer 6, and tag restorer 11. The other elements operate as in conventional machine translation systems, translating one sentence at a time. The partially underlined sentence 'He is president of our company,' given earlier, will be used as an example.

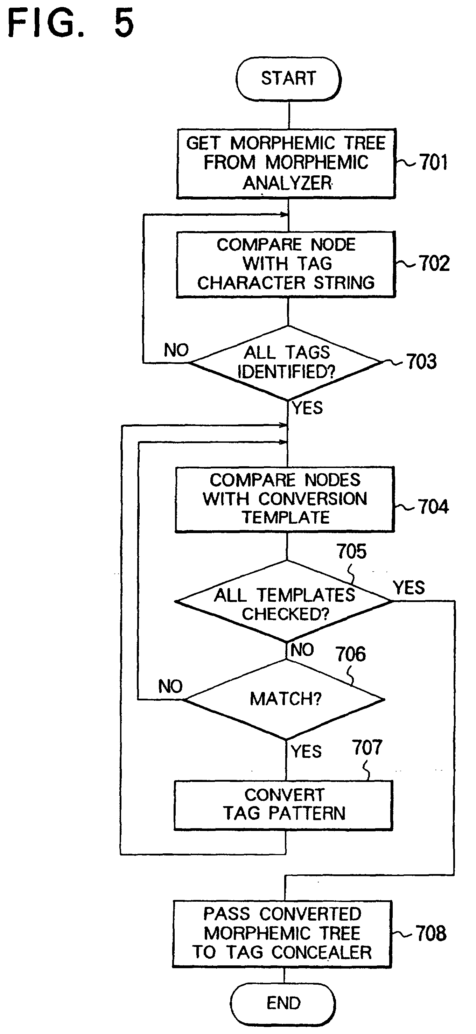

Referring to FIG. 5, the operation of the tag converter 4 can be broadly divided into a tag identification phase (steps 701 to 703) and a tag conversion phase (steps 704 to 708).

In step 701, the tag converter 4 receives a morphemic tree from the morphemic analyzer 3. This morphemic tree represents one sentence which the morphemic analyzer 3 has analyzed from the input text, and is basically a sequence of nodes, each representing a natural-language morpheme or a tag.

In step 702, by referring to tag identification information stored in the control memory 5 (FIG. 2), the tag converter 4 identifies tag nodes. Specifically, the tag converter 4 compares each node with each character string listed in the tag field 201 of the tag identification information table 200. If a node matches the character string stored in the tag field 201 of a particular record, the node is identified as a tag node, and the tag converter 4 reads the other fields of the same record to get other information about the node (attribute name, attribute value, tag type, related tag). Nodes not matching the contents of the tag field 201 of any record in the tag identification information table 200 are assumed not to be tag nodes.

This matching process continues until all tags in the morphemic tree have been identified. An affirmative decision is then reached in step 703, and processing proceeds into the tag conversion phase.

Aided by the tag identification information obtained in step 702, the tag converter 4 now begins checking the records in the tag conversion and restoration rule table 300 that are indicated by the type field 302 to be applicable to tag conversion (step 704). This process continues until all such records have been checked (step 705). The check consists of testing whether the pattern in the template field 301 of the record matches any series of consecutive nodes in the morphemic tree (step 706). If a match is found, the rule in the converted pattern field 303 is applied, by changing the tag type, for example, or inserting new tags in the morphemic tree (step 707). The same template may match two or more different series of consecutive nodes, in which case the tags in each series are converted. After the checking and conversion of one template pattern has been completed, the process returns to step 704 to check the next record.

When the process from step 704 to step 707 has been completed for all conversion-type records in the tag conversion and restoration rule table 300, producing an affirmative decision in step 705, the resulting morphemic tree with converted tags is passed to the tag concealer 6 (step 708), and the operation of the tag converter 4 ends.

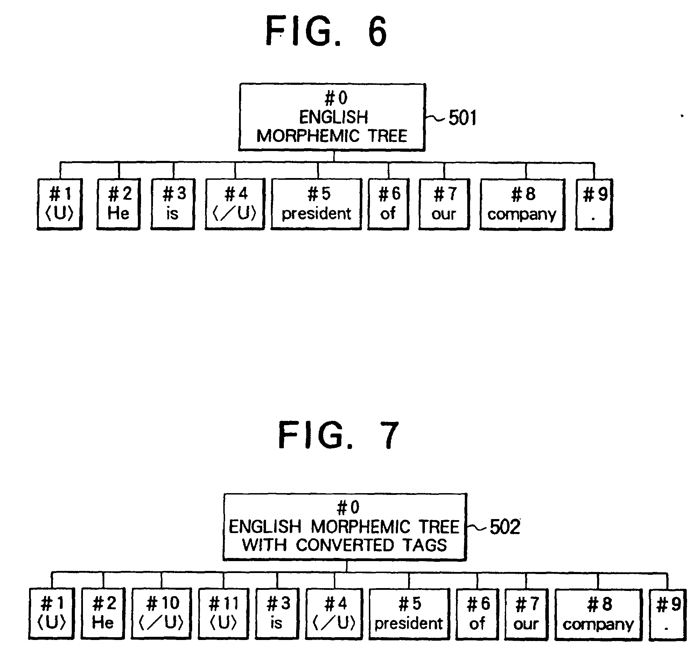

The operation of the tag converter 4 will next be illustrated using the tagged sentence '<U>He is</U> president of our company.' FIG. 6 shows the morphemic tree 501 of this sentence as obtained from the morphemic analyzer 3 (step 701). The morphemic tree is a two-level tree with a root node #0 by which the tree is identified, and leaf nodes #1 to #9 corresponding to the morphemes in the sentence. Each leaf node comprises a node number, the character string of a morpheme, and various auxiliary information, which is not directly relevant to this embodiment and has been omitted to simplify the drawing.

The same applies, incidentally, to the other morphemic trees that will be shown in the drawings. Each leaf node stores various items of auxiliary information, in addition to the node number and the character string of a morpheme, but information not directly relevant to the invention will not be shown.

By referring to the tag identification information table 200, the tag converter 4 recognizes that the <U> in node #1 is an opening tag, and the </U> in node #4 is its related tag (step 702). No other tag nodes are present in this morphemic tree 501.

Next, in checking the records in the tag conversion and restoration rule table 300, the tag converter 4 finds that the template {Open}@+{Ref} in the first record 311 matches the first four nodes of the sentence (step 706). Specifically, {Open} matches <U> in node #1, @+ matches 'He is' in nodes #2 and #3, and {Ref} matches </U> in node #4. The tag converter 4 converts this part of the sentence according to the converted pattern ({Open}@{Ref})+ given in the first record 311, thus converting <U>He is</U> to <U>He</U><U>is</U>.

FIG. 7 shows the resulting morphemic tree 502 with converted tags. Two new nodes, namely node #10 (</U>) and node #11 (<U>), have been inserted between nodes #2 and #3. Existing node numbers are not changed, and new node numbers are assigned in sequence from the highest existing node number, thereby preserving the uniqueness of the node numbers.

No other tag patterns matching any of the templates in the conversion-type records in the tag conversion and restoration rule table 300 are to be found, so the morphemic tree 502 shown in FIG. 7 is passed to the tag concealer 6.

Next, the operation of the tag concealer 6 will be described.

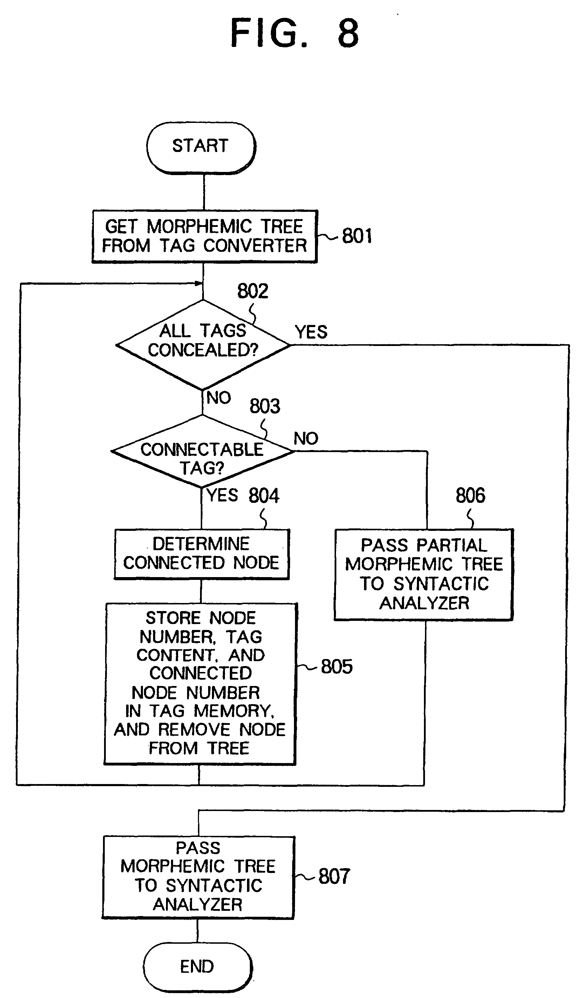

Referring to FIG. 8, the tag concealer 6 first gets the morphemic tree 502 output by the tag converter 4 (step 801), then repeats a processing loop from step 802 to step 806 until the concealing of all tags in this morphemic tree 502 is completed; that is, until an affirmative result is obtained in step 802.

If there remains a tag to be concealed, the tag concealer 6 refers to the tag identification information table 200 stored in the control memory 5 to find out whether the tag is connectable (step 803). Connectability depends on the tag type: for example, tags of any of the types that function in relation to other tags are connectable, and tags of the Separate type are not connectable.

For connectable tags, the tag concealer 6 determines a connected node (step 804). The rules for making this determination are built into the tag concealer 6. For example, the tag concealer 6 knows that an opening tag connects to the first following non-tag node, and a closing tag connects to the first preceding non-tag node. The tag concealer 6 stores the node number of each connectable tag in the tag information table 400, together with the content (character string) of the tag and the node number of the connected node, then removes the tag node from the morphemic tree, thereby concealing the tag node from the natural-language processing that is to follow (step 805).

If the tag is not connectable, the tag concealer 6 subdivides the morphemic tree, outputs a first partial morphemic tree comprising the nodes preceding the non-connectable tag node (step 806), then returns to step 802 to process a second partial morphemic tree comprising the nodes following the non-connectable tag node. Subsequent machine translation is carried out separately on each of these two partial morphemic trees, treating the non-connectable tag as a sentence delimiter.

The further handling of non-connectable tag nodes themselves depends on the type of tag. Tag nodes of the Separate type, for example, are not submitted to machine translation, but are inserted into the output text at positions between the output obtained after machine translation of the two partial morphemic trees.

When an affirmative decision is reached in step 802, indicating that the concealment of all tags has been completed, the tag concealer 6 passes the remaining morphemic tree or partial morphemic tree to the syntactic analyzer 8 (step 803). The operation of the tag concealer 6 then ends.

As a specific example, the operation of the tag concealer 6 when furnished with the morphemic tree 502 shown in FIG. 7 will be described next.

After acquiring the morphemic tree 502 (step 801), the tag concealer 6 finds four tag nodes, and determines that each tag node is connectable (step 803). Node #1 (<U>) is of the Open type, and therefore connects to the immediately following node #2 (step 804). The node numbers #1 and #2 and the tag character string <U> are stored in the first record 411 of the tag information table 400, and node #1 is removed from the morphemic tree (step 805). Node #10 (</U>) is of the Close type, and therefore connects to the immediately preceding node #2 (step 804). The node numbers #10 and #2 and the tag character string </U> are stored in the second record 421 of the tag information table 400, and node #10 is also removed from the morphemic tree (step 805). Tag nodes #11 and #4 are processed similarly, generating the third record 431 and fourth record 441 in the tag information table 400.

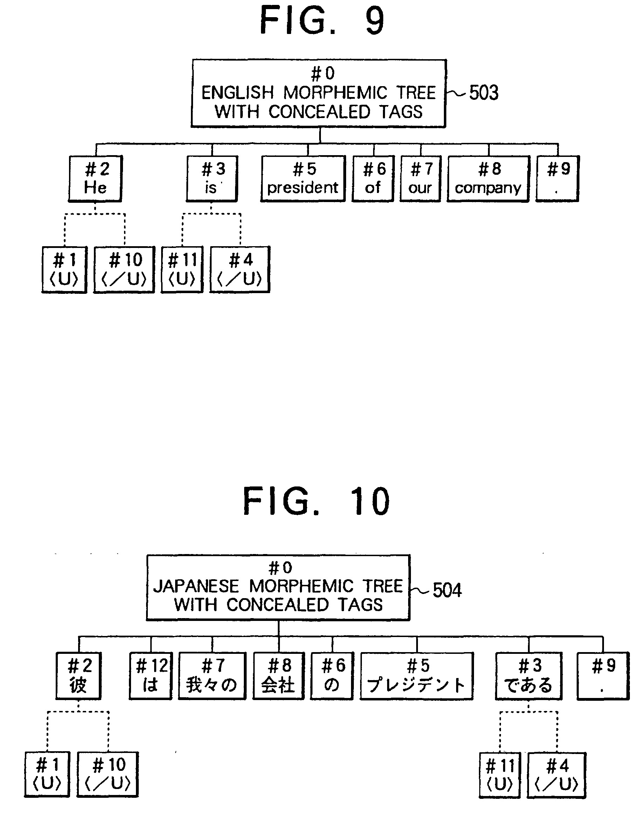

FIG. 9 shows the resulting morphemic tree 503, which the tag concealer 6 passes to the syntactic analyzer 8 (step 807). The dotted lines are not part of this morphemic tree 503, but indicate the existence of concealed tag nodes, temporarily stored in the tag memory 7, which are connected to nodes #2 and #3.

The morphemic tree 503 is now translated from English into Japanese by the syntactic analyzer 8, syntax converter 9, and syntax generator 10. The translation process may rearrange the order of morphemes, but the node numbers of the existing morphemes are left unchanged. The translation process may also generate additional nodes, which are assigned new node numbers in sequence from the highest existing node number.

FIG. 10 shows the morphemic tree 504 output by the syntax generator 10 after translation of the morphemic tree 503 in FIG. 9. Node #2 is read as 'kare' (he), node #12 as 'wa,' (a particle indicating that 'kare' is the subject of the sentence), node #7 as 'wareware no' (our), node #8 as 'kaisha' (company), node #6 as 'no' (a particle indicating possession), node #5 as 'purejidento' (president), and node #3 as 'de aru' (is). Node #12 is a new node generated by the translation process, and receives the next node number in sequence from the new node numbers #10 and #11 that were generated by the tag converter 4. The dotted lines in FIG. 10 are not part of this morphemic tree 504, but indicate tag connections as in FIG. 9.

Next, the operation of the tag restorer 11 will be described.

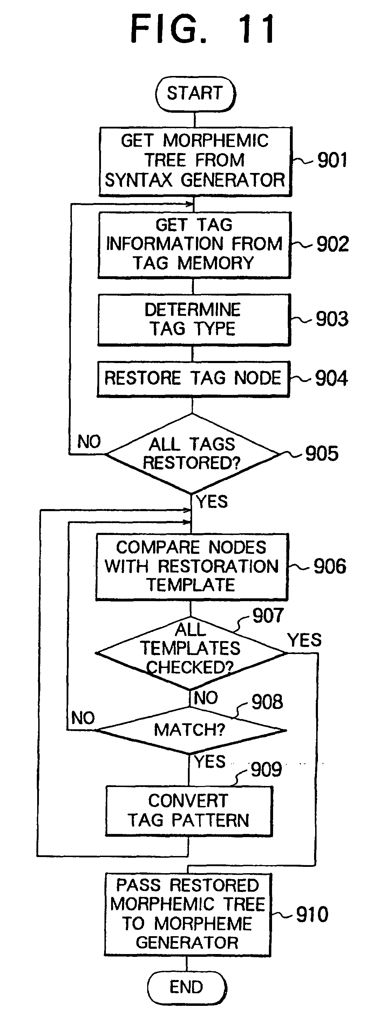

Referring to FIG. 11, the tag restorer 11 receives the Japanese morphemic tree 504 with concealed tags from the syntax generator 10 (step 901). In steps 902 to 905, the tag restorer 11 restores all of the tags stored in the tag memory 7 to this morphemic tree. For each record in the tag information table 400, the tag restorer 11 gets the tag node number, tag character string, and connected node number (step 902). By comparing the tag character string with the contents of the tag field 201 in the tag identification information table 200, the tag restorer 11 determines the tag type (step 903). From the tag type, the tag restorer 11 determines where to place the tag node in relation to its connected node, and restores the tag node at this position (step 904).

When an affirmative decision is reached in step 905, indicating that all tags in the tag information table 400 have been restored, the tag restorer 11 carries out further processing to trim the resulting morphemic tree according to the rules given in the tag conversion and restoration rule table 300, in order to remove redundant tag nodes.

Taking each record in the tag conversion and restoration rule table 300 in turn, the tag restorer 11 checks the type field 302 to decide whether the record pertains to conversion or restoration. If the record pertains to restoration, the tag restorer 11 checks for matches between the pattern given in the template field 301 and a series of consecutive nodes in the morphemic tree (step 906). This check is carried out on all records of the 'restoration' type (step 907). When a match is not found, the tag restorer 11 returns to step 906 to check the next record. When one or more matches are found, the tag restorer 11 deletes or otherwise alters the matching series of nodes according to the rule given in the converted pattern field 303 of the tag conversion and restoration rule table 300 (step 909).

For example, the template '</U><U>' in the fourth record 341 in the tag conversion and restoration rule table 300 matches the two middle nodes in the hypothetical pattern <U>akai</U><U>hon</U>. The converted pattern is 'no entry' (meaning deletion), so the tag restorer 11 replaces this series of nodes with the shorter series <U>akai hon</U>. Both <U>akai</U><U>hon</U> and <U>akai hon</U> are printed or displayed as akai hon (meaning 'red book'), but <U>akai</U><U>hon</U> contains two unnecessary tags (</U><U>). By eliminating these two tags, the tag restorer 11 reduces the data size of the output text.

When an affirmative decision is reached in step 907, indicating that there are no more templates to be checked, the tag restorer 11 passes the resulting morphemic tree to the morpheme generator 12 (step 910). The operation of the tag restorer 11 then ends.

The operation of the tag restorer 11 when furnished with the morphemic tree 504 in FIG. 10 will be shown next as an example.

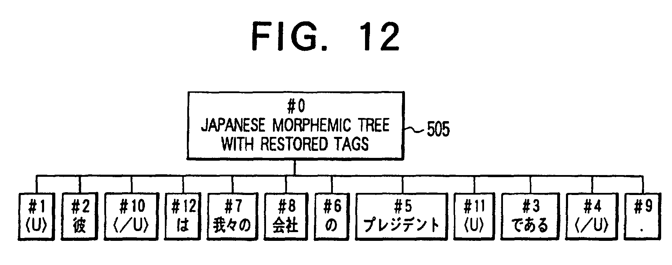

After receiving this morphemic tree 504 (step 901), the tag restorer 11 refers to the tag information table 400, the contents of which are as shown in FIG. 4. From the first record in this table, the tag restorer 11 learns that node #1 is a <U> tag connected to node #2 (step 902). From the first record 211 in the tag identification information table 200 shown in FIG. 2, the tag restorer 11 learns that <U> is an opening tag (step 903), hence a tag that should be placed just before its connected node #2. The tag restorer 11 accordingly restores node #1 at this position (step 904), as shown in FIG. 12. The other tag nodes #10, #11, and #4 are restored similarly.

After restoring all four tags, the tag restorer 11 attempts to match templates from the restoration-type records 341, 351, and 361 in the tag conversion and restoration rule table 300 to the morphemic tree 505 shown in FIG. 12 (steps 906 to 908). In this example, no matching templates can be found. The morphemic tree 505 in FIG. 12 is therefore output without further alteration to the morpheme generator 12 (step 910).

When given the morphemic tree 505 shown in FIG. 12, the morpheme generator 12 removes the node numbers and other information related to the tree structure, and outputs a Japanese sentence in tagged text form. The romanized representation of this output sentence is given below.
<U>Kare</U> wa wareware no kaisha
no purejidento <U>de aru</U>.
This sentence is printed or displayed as follows.

Kare wa wareware no kaisha no purejidento de aru. The underlines appear in the correct places, emphasizing the words meaning 'He' and 'is.' The typographical effect intended in the English sentence is faithfully reproduced in the Japanese translation, despite the different word order.

Next, a second embodiment will be described. The second embodiment also practices the invention in an English-to-Japanese machine translation system.

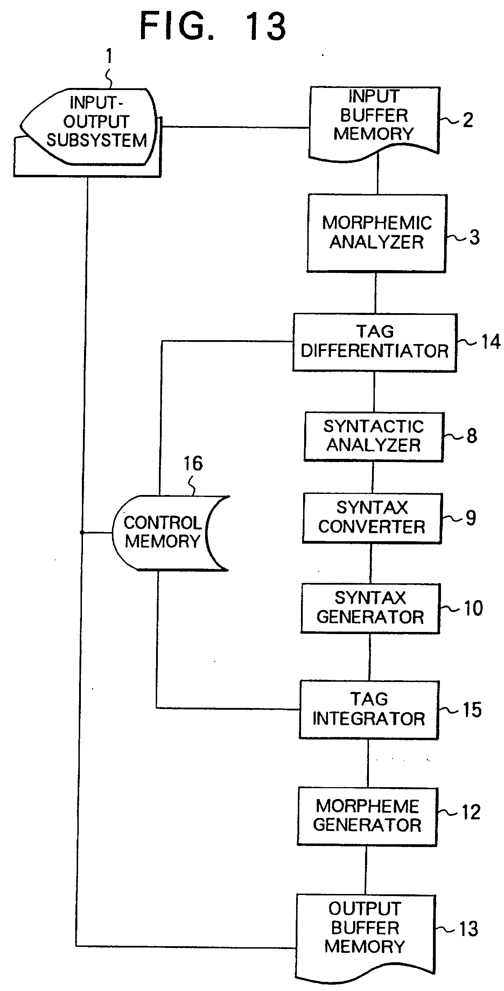

Referring to FIG. 13, the second embodiment comprises the same input-output subsystem 1, input buffer memory 2, morphemic analyzer 3, syntactic analyzer 8, syntax converter 9, syntax generator 10, morpheme generator 12, and output buffer memory 13 as the first embodiment. Repeated descriptions of these elements will be omitted.

In place of the tag converter 4 and tag concealer 6 of the first embodiment, the second embodiment has a tag differentiator 14, which differentiates paired tags, removes paired tag nodes from the morphemic tree, and attaches corresponding attributes to all morphemic nodes that were enclosed between the paired tags. In place of the tag restorer 11 of the first embodiment, the second embodiment has a tag integrator 15 that performs processing reverse to that of the tag differentiator 14. In place of the control memory 5 of the first embodiment, the second embodiment has a different control memory 16 which is read by both the tag differentiator 14 and tag integrator 15. The second embodiment does not store tag information separately from the English and Japanese morphemic trees, hence does not require a tag memory 7.

The coupling of the control memory 16 and input-output subsystem 1 in FIG. 13 indicates that the control memory 16 can be edited by a human user, as in the first embodiment.

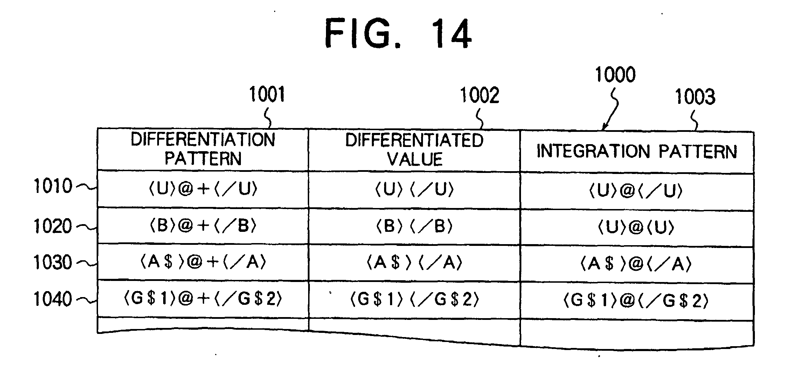

FIG. 14 illustrates the structure of the information stored in the control memory 16. In the second embodiment, the control memory 16 stores a single tag differentiation and integration rule table 1000.

The tag differentiation and integration rule table 1000 has four records 1010, 1020, 1030, and 1040, each comprising a differentiation pattern field 1001, a differentiated value field 1002, and an integration pattern field 1003. As in the first embodiment, an at-sign (@) denotes an arbitrary morpheme, and a plus-sign (+) denotes an arbitrary number of repetitions. In addition, a dollar-sign ($) is used to designate an arbitrary character string.

The differentiated-value field 1002 contains attribute values that can be added to natural-language morpheme nodes, to indicate the typographic effects determined by the tags in the differentiation pattern field 1001. For the sake of clarity, these attributes are shown in FIG. 14 by the same character strings as the tags themselves, but of course different character strings may be used to designate the attributes.

The first record 1010 in FIG. 14 lists <U>@+</U> as a differentiation pattern. As in the first embodiment, this pattern indicates that one or more morphemes, represented by the '@+' notation, are to be underlined. The attribute assigned to these morphemes as a differentiated value is the underlining attribute, denoted <U></U>. When a morpheme having this attribute is integrated, the integration pattern consists of the <U> tag, then the morpheme, then the </U> tag.

The second record 1020 lists a differentiation pattern <B>@+</B>, which indicates that the enclosed morphemes are to be printed or displayed in bold characters. The corresponding attribute is the boldface attribute, designated by <B></B>, but the integration pattern is <U>@<U/>, the same integration pattern as in the first record 1010.

The third record lists a differentiation pattern <A$>@+</A>, which denotes the anchor of a hypertext link such as, for example '<A HREF="XXX.html">link to XXX</A>.' The character string 'HREF="XXX.html"' corresponds to the dollar sign, and 'link to XXX' matches the '@+' notation. The assigned attribute <A$></A> is the anchor attribute. A morpheme having this attribute is integrated to a pattern consisting of <A HREF="XXX.html"> followed by the morpheme, then by </A>.

The operations of the tag differentiator 14 and tag integrator 15 will be described below.

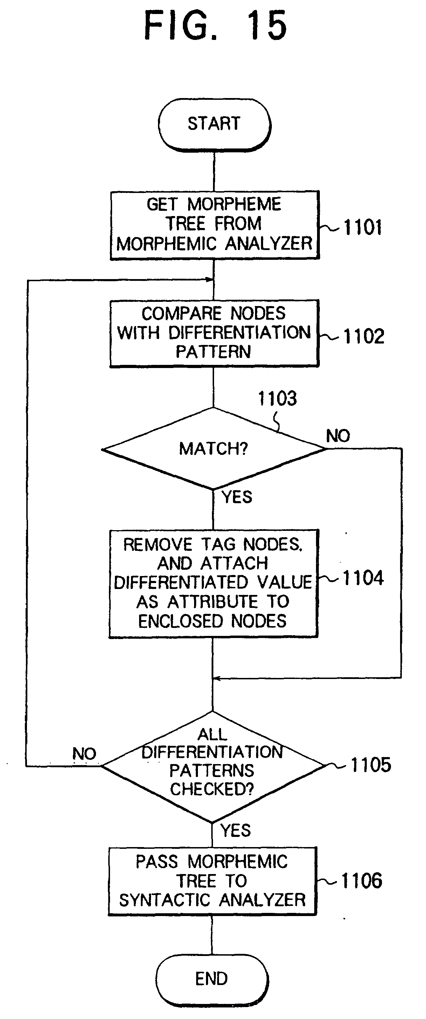

FIG. 15 illustrates the operation of the tag differentiator 14. In step 1101, the tag differentiator 14 receives a morphemic tree such as the one shown in FIG. 6 from the morphemic analyzer 3. In step 1102, the tag differentiator 14 reads the differentiation pattern from a record in the control memory 16. In step 1103, the tag differentiator 14 attempts to match this differentiation pattern with a series of consecutive nodes in the morphemic tree. If a match is found, in the next step 1104, the tag differentiator 14 reads the differentiated value from the same record in the control memory 16, attaches this value as an attribute to each node enclosed between the tag nodes at the two ends of the pattern, and removes those two tag nodes from the morphemic tree. If no match is found, step 1104 is skipped.

When all series of nodes matching the differentiation pattern have been differentiated in this way, in step 1105 the tag differentiator 14 decides whether there are any further records in the tag differentiation and integration rule table 1000 in the control memory 16. If there are, the tag differentiator 14 returns to step 1102 to process the next record. If there are not, then in step 1106 the tag differentiator 14 passes the resulting morphemic tree to the syntactic analyzer 5, after which the operation of the tag differentiator 14 ends.

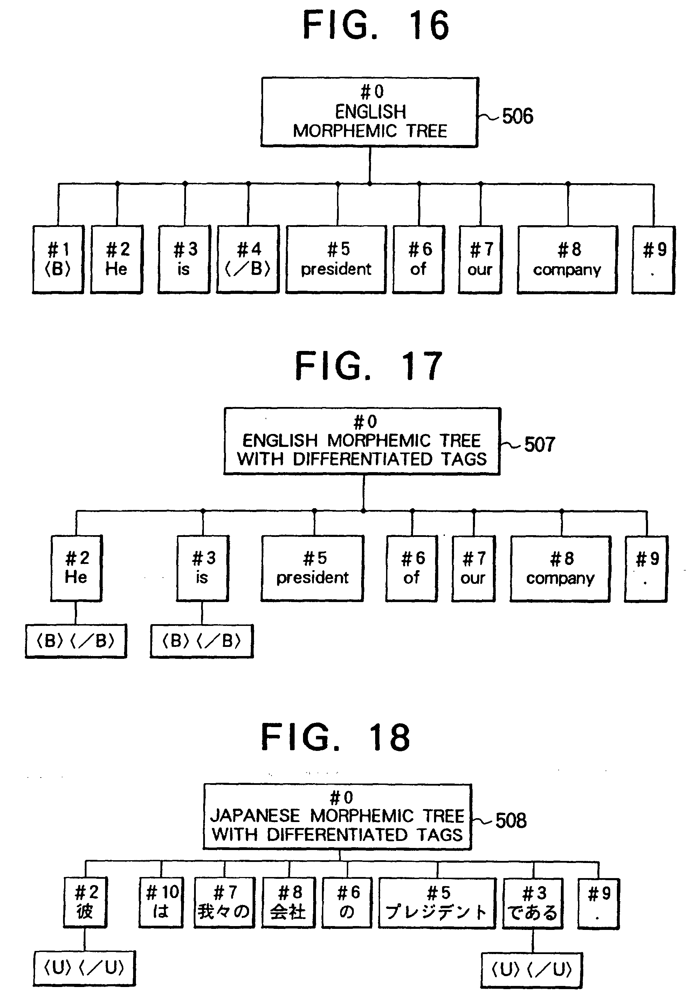

The operation of the tag differentiator 14 when furnished with the morphemic tree 506 shown in FIG. 16 will be described next as an example. This morphemic tree 506 is identical to the morphemic tree 501 shown in FIG. 6, except that node #1 contains the <B> tag indicating the start of boldface, and node #4 contains the </B> tag indicating the end of boldface. This morphemic tree represents the sentence 'He is president of our company,' in which the words 'He is' are emphasized by bold characters.

Upon receiving this morphemic tree 506 (step 1101), the tag differentiator 14 reads the differentiation pattern <U>@+</U> from the first record 1010 in the tag differentiation and integration rule table 1000 (step 1102), and finds that this pattern does not match any series of nodes in the morphemic tree 501 (step 1103).

Since the first record 1010 is not the last record in the tag differentiation and integration rule table 1000 (step 1105), the tag differentiator 14 returns to step 1102 and reads the differentiation pattern <B>@+</B> from the next record 1020. This pattern matches the first four nodes (<B>He is</B>) of the morphemic tree 506 (step 1103). The two tag nodes <B> and </B> are accordingly removed, and the boldface attribute is attached to the nodes representing the morphemes 'He' and 'is' (step 1104). The attached attribute becomes one of the various items of auxiliary information stored in the node.

No further matches between this differentiation pattern and the morphemic tree 506 are to be found, and none of the other differentiation patterns in the tag differentiation and integration rule table 1000 match any part of the morphemic tree 506, so after all differentiation patterns have been checked, the tag differentiation process ends without further alteration of the tree structure. FIG. 17 shows the final morphemic tree 507 output by the tag differentiator 14. Nodes #1 and #4 have been removed, and the boldface attribute is attached to nodes #2 and #3.

This morphemic tree 507 is translated from English into Japanese by the syntactic analyzer 8, syntax converter 9, and syntax generating means 10, as in the first embodiment. In the translation process, attributes such as the boldface attribute are ignored, but are left attached to their respective nodes. FIG. 18 shows the translated morphemic tree 508, with boldface attributes still attached to node #2 and node #3.

Next, the operation of the tag integrator 15 will be described.

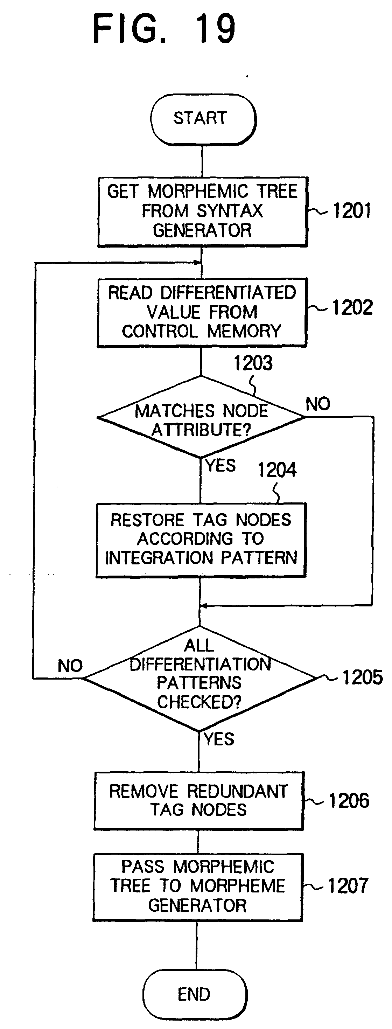

Referring to FIG. 19, in step 1201, the tag integrator 15 receives the Japanese morphemic tree 508 output by the syntax generator 10. In step 1202, the tag integrator 15 reads the differentiated value stored in a record in the tag differentiation and integration rule table 1000 in the control memory 16. In step 1203, the tag integrator 15 checks to see whether any nodes in the morphemic tree 507 have this differentiated value as an attribute. If any nodes with this attribute are found, then in step 1204, each such node is integrated according to the integration pattern in the same record in the tag differentiation and integration rule table 1000, thereby restoring a pair of tag nodes. If no nodes having this attribute are present, step 1204 is skipped.

When all nodes having this particular attribute have been integrated, in step 1205 the tag differentiator 14 decides whether there are any further records to be processed in the tag differentiation and integration rule table 1000. If there are, the tag differentiator 14 returns to step 1202 to process the next record.

In step 1206, after all records have been processed and all integrations performed, the tag integrator 15 removes redundant nodes. When a closing node is immediately followed by the corresponding opening node, for example, both nodes are removed. Thus <U>akai</U><U>hon</U> would be shortened to <U>akai hon</U>, as in the first embodiment.

In step 1207, the tag integrator 15 passes the trimmed morphemic tree resulting from tag integration and removal of redundant nodes to the morpheme generator 10. The operation of the tag integrator 15 then ends.

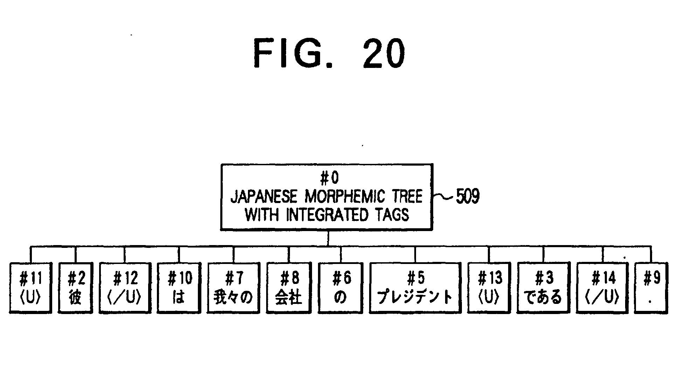

When furnished with the morphemic tree 508 shown in FIG. 18, the tag integrator 15 operates as follows. After the morphemic tree 508 is received (step 1201), the tag integrator 15 reads the first record 1010 from the tag differentiation and integration rule table 1000 (step 1202), and searches for nodes having the differentiated value <U></U> as an attribute (step 1203). No such nodes are found. Next, the tag integrator 15 reads the second record 1020 (step 1202), and searches for nodes having the differentiated value <B></B> as an attribute (step 1203). Two nodes are now found: nodes #2 and #3. Each of these nodes is integrated according to the integration pattern <U>@</U> in the second record 1020 (step 1204). FIG. 20 shows the resulting morphemic tree 509, which has four new nodes: node #11 (<U>), node #12 (</U>), node #13 (<U>), and node #14 (</U>).

There are no nodes having as attributes any of the other differentiated values in the tag differentiation and integration rule tabled 1000, so the tag integrator 15 proceeds to look for redundant nodes to remove from the morphemic tree 508 (step 1206). No redundant nodes are to be found, so the morphemic tree 509 is supplied to the morpheme generator 12.

Aside from the node numbers, the morphemic tree 509 in FIG. 20 is identical to the morphemic tree 505 output by the tag restorer 11 in the first embodiment, shown in FIG. 12. The morpheme generator 12 therefore generates the same output text as in the first embodiment:
<U>Kare</U> wa wareware no kaisha
no purejidento <U>de aru</U>.
The source text was printed or displayed as follows, with 'He is' in boldface:
He is president of our company.
The translated sentence, however, is printed or displayed as shown below:
Kare wa wareware no kaisha no purejidento de aru.
The emphasis given to 'He is' by bold characters in the English sentence has been expressed by underlining of the words meaning 'He' and 'is' in the Japanese sentence.

As illustrated above, the present invention provides a solution to the problem of misplaced typographical effects that commonly occurs when a machine translation system encounters a tagged text. Moreover, the invention can convert typographical effects appropriate in the source language to different typographical effects suitable for the target language. These capabilities do not exhaust the utility of the present invention, however.

The invention can be used to conceal embedded information while a text is undergoing any type of natural-language processing. For example, the invention can be adapted to conceal tags while a tagged text undergoes a grammar check by a grammar-checking computer program, then restore the tags in the appropriate places after grammatical errors have been corrected.

The concealed information need not take the form of tags. Control codes, escape sequences, and the like can be similarly concealed and restored.

The invention can also be used as a filter to eliminate undesired typographical effects from electronic documents, even if no natural-language processing is performed. For example, if the tag differentiator 14 in the second embodiment is linked directly to the tag integrator 15, bypassing the machine translation process, and if the second record 1020 in the tag differentiation and integration rule table 1000 is altered so that the integration pattern is @ instead of <U>@</U>, the second embodiment will convert bold characters to plain characters, without making other alterations.

Conversely, the invention can be used to add typographical effects that were not present in the original electronic document. For example, the first embodiment can be adapted to underline key words, by listing each key word as a template in a conversion-type record in the tag conversion and restoration rule table 300, the converted pattern consisting of the key word preceded by <U> and followed by </U>.

The invention can also be used to convert an electronic document from one tagging system to another. An electronic document conforming to the standard generalized markup language (SGML), for example, can be converted to conform to TeX tagging specifications in this way. This type of conversion can be performed with or without machine translation or other natural-language processing.

Aside from these alternative uses of the invention, the embodiments described above can be modified in many ways. For example, although the table formats shown in FIGs. 2, 3, and 14 simplify editing, the tag identification information, tag conversion and restoration rules, and tag differentiation and integration rules can be stored in other formats. A list format or tree format can be used, for example. Similarly, the tag memory does not have to store tag information in a table format, but can use some other format.

The control memory may be protected so that its contents cannot be edited by the user. Conversely, in the first embodiment, the user may be allowed to edit the tag memory as well as the control memory.

The embodiments described above operated on morphemic trees, but it is not necessary for the unit of information to be a morpheme. Depending on the type of tags being processed, other units may be used, such as letters, words, or sentences, for example.

The tag restorer 11 in the first embodiment, and the tag integrator 15 in the second embodiment, need not be disposed between the syntax generator 10 and morpheme generator 12. They could be disposed between the syntax converter 9 and syntax generator 10, for example, or in a position after the morpheme generator 12.

The tag restorer 11 in the first embodiment, and the tag integrator 15 in the second embodiment, do not have to eliminate redundant tags. This step is desirable because it reduces the final data size, but since this step does not change the typographic appearance of the printed or displayed output text, it may be omitted.

In the second embodiment, the process of conversion from boldface to underlines was carried out by the tag integrator 15, but the same conversion could be accomplished by the tag differentiator 14. It suffices to alter the differentiated value in the second record 1020 in the tag differentiation and integration rule table 1000 from <B></B> to <U></U>. The tag converter 4 in the first embodiment could also convert boldface to underlines, by means of a conversion template <B>@+</B> with converted pattern (<U>@</U>)+.

The tag converter 4 and tag concealer 6 of the first embodiment, or the tag differentiator 14 of the second embodiment, can be used without the tag restorer 11 or tag integrator 15. This mode of use is appropriate in natural-language processing systems that must operate on tag-free text, but must also know about intended typographical effects. An example might be a text-to-speech system that reproduces typographical effects by altering the pitch or stress of a synthesized speech signal, without pronouncing the tags that specify the effects. In this case, the natural-language processing system must read the tag memory 7 in the first embodiment, or the attributes attached to the nodes in the second embodiment.

Those skilled in the art will recognize that further modifications are possible within the scope claimed below.

## Claims

1. A method of converting an electronic document having embedded information specifying typographical effects, comprising the steps of:
decomposing said electronic document into units of information, among which there are both natural-language units and units specifying typographical effects;
converting the units specifying typographical effects so that each unit specifying a typographic effect specifies that typographic effect for only one natural-language unit, additional units specifying typographical effects being added as necessary; and
concealing the units specifying typographical effects, as thus converted by
removing said units specifying typographical effects from said electronic document; and
storing said units specifying typographical effects in separately from said electronic document or
attaching attribute information specifying corresponding typographical effects to said natural-language units.

2. The method of claim 1, comprising the further steps of:
processing said natural-language units to produce a processed natural-language document; and
restoring the units specifying typographical effects, as concealed above, to said processed natural-language document.

3. The method of claim 2, wherein said step of processing said natural-language units comprises machine translation of said natural-language units from one natural language into a different natural language.

4. The method of claim 2, comprising the further step of removing redundant units specifying typographical effects from said processed natural-language document, after said step of restoring.

5. The method of claim 2, wherein said step of restoring comprises converting units specifying a particular typographical effect to units specifying a different typographical effect.

6. The method of claim 2, wherein said step of converting comprises converting units specifying a particular typographical effect to units specifying a different typographical effect.

7. The method of claim 2, wherein said step of restoring comprises converting units specifying typographical effects according to a first scheme to units specifying identical typographical effects according to a second scheme.

8. The method of claim 2, wherein said step of converting comprises converting units specifying typographical effects according to a first scheme to units specifying identical typographical effects according to a second scheme.

9. The method of claim 1, comprising the further steps of:
storing, in an editable memory (5), a set of rules referred to in said step of converting and in said step of restoring, specifying how said units specifying typographical effects are to be identified and converted; and
editing said set of rules according to different schemes by which said typographical effects are specified in different types of electronic documents.

10. A document conversion system for converting an electronic document consisting of units of information, among which both natural-language units and units specifying typographical effects occur, to enable natural-language processing of the electronic document, comprising:
a converter (4) for converting said units specifying typographical effects, and adding units specifying typographic effects as necessary, so that each unit specifying a typographic effect specifies said typographical effect for only one natural-language unit;
a concealer (6), coupled to said converter (4), for removing the units specifying typographical effects, as thus converted, from said electronic document before said natural-language processing;
a first memory (7), coupled to said concealer (6), for storing the units specifying typographical effects removed by said concealer (6); and
a second memory (5), coupled to said converter (4), storing information specifying how said converter (4) is to convert said units specifying typographic effects.

11. The document conversion system of claim 10, also comprising an editing means (1) by which a human user can edit the information stored in said second memory (5).

12. The document conversion system of claim 10, wherein said second memory (5) stores at least:
a first pattern of units specifying a particular typographic effect to be recognized by said converter (4) in said electronic document; and
a second pattern of units to which said converter (4) converts said first pattern of units.

13. The document conversion system of claim 10, further comprising:
a restorer (11), coupled to said second memory (5), for restoring the units specifying typographic effects from said first memory (7) to said electronic document after said natural-language processing; wherein
said second memory (5) also stores information by which said restorer (11) decides how to restore the units specifying typographic effects to said electronic document.

14. The document conversion system of claim 13, wherein said natural-language processing comprises machine translation of said natural-language units from one natural language into a different natural language.

15. The document conversion system of claim 13 wherein, after restoring said units specifying typographic effects, said restorer (11) removes units specifying redundant typographic effects from said electronic document.

16. The document conversion system of claim 13, wherein said second memory (5) stores at least:
a third pattern of units specifying typographic effects to be recognized by said restorer (11) in said electronic document; and
a fourth pattern of units to which said restorer (11) converts said third pattern of units.

17. A document conversion system for converting an electronic document consisting of units of information, among which both natural-language units and units specifying typographical effects occur, to enable natural-language processing of the electronic document, comprising:
a differentiator (14) for removing the units specifying typographical effects from said electronic document, and attaching auxiliary information specifying corresponding typographical effects to each individual natural-language unit to which the typographical effects apply, prior to said natural-language processing, said auxiliary information being concealed from said natural-language processing and unaffected by said natural-language processing; and
a memory (16) coupled to said differentiator (14), storing information by which said differentiator (14) recognizes said units specifying typographical effects and selects said auxiliary information specifying corresponding typographical effects.

18. The document conversion system of claim 17, also comprising an editing means (1) by which a human user can edit the information stored in said memory (16).

19. The document conversion system of claim 17, further comprising:
an integrator (15) coupled to said memory (16), for adding units specifying typographic effects to said electronic document after said natural-language processing, responsive to the auxiliary information attached by said differentiator (14); wherein
said memory (16) also stores information by which said integrator (15) decides what units specifying typographic effects to add, responsive to said auxiliary information.

20. The document conversion system of claim 19 wherein, when presented with a natural-language unit having certain auxiliary information, said integrator (15) adds a unit starting a corresponding special effect just before said natural-language unit, and adds a unit ending the corresponding special effect just after said natural-language unit.

21. The document conversion system of claim 19, wherein said natural-language processing comprises machine translation of said natural-language units from one natural language into a different natural language.

22. The document conversion system of claim 19, wherein said memory (16) stores at least:
a pattern of units specifying a particular typographic effects to be recognized by said differentiator (14);
corresponding auxiliary information; and
a pair of units specifying a typographic effect, to be added by said integrator (15) before and after each natural-language unit having said corresponding auxiliary information.

23. The document conversion system of claim 19 wherein, after adding said units specifying typographic effects, said integrator (15) deletes redundant units specifying typographic effects.

## Patentansprüche

1. Verfahren zu Umsetzung eines elektronischen Dokuments mit eingebetteter Information, die typographische Effekte spezifiziert, umfassend die Schritte:
Zerlegen des elektronischen Dokuments in Informationseinheiten, unter denen sich sowohl Einheiten natürlicher Sprache als auch typographische Effekte spezifizierende Einheiten befinden,
Umsetzen der typographische Effekte spezifizierenden Einheiten, so dass jede einen typographischen Effekt spezifizierende Einheit diesen typographischen Effekt für nur eine Einheit natürlicher Sprache spezifiziert, wobei zusätzliche, typographische Effekte spezifizierende Einheiten nach Bedarf hinzugefügt werden;
Verbergen der typographische Effekte spezifizierenden Einheiten, die auf diese Weise konvertiert sind durch
Entfernen der typographische Effekte spezifizierenden Einheiten von dem elektronischen Dokument und
Speichern der typographische Effekte spezifizierenden Einheiten separat von dem elektronischen Dokument oder
Verbinden der Attributinformation, die entsprechende typographische Effekte spezifizieren, mit den Einheiten natürlicher Sprache.

2. Verfahren nach Anspruch 1, umfassend die weiteren Schritte:
Verarbeiten der Einheiten natürlicher Sprache, um ein Dokument mit verarbeiteter natürlicher Sprache zu erzeugen; und
Wiederherstellen der typographische Effekte spezifizierenden Einheiten, die wie oben verborgen wurden, zu dem Dokument mit verarbeiteter natürlicher Sprache.

3. Verfahren nach Anspruch 2, worin der Schritt der Verarbeitung der Einheiten natürlicher Sprache eine Maschinenübersetzung für die Einheiten natürlicher Sprache von einer natürlichen Sprache in eine andere natürliche Sprache.

4. Verfahren nach Anspruch 2, umfassend den weiteren Schritt, dass redundante typographische Effekte spezifizierende Einheiten von dem Dokument mit verarbeiteter natürlicher Sprache nach dem Schritt der Wiederherstellung entfernt werden.

5. Verfahren nach Anspruch 2, worin der Schritt der Wiederherstellung das Umsetzen von einen speziellen typographischen Effekt spezifizierenden Einheiten in einen unterschiedlichen typographischen Effekt spezifizierender Einheiten umfasst.

6. Verfahren nach Anspruch 2, worin der Schritt des Umsetzens das Umsetzen von einen speziellen typographischen Effekt spezifizierenden Einheiten in einen unterschiedlichen typographischen Effekt spezifizierende Einheit umfasst.

7. Verfahren nach Anspruch 2, worin der Schritt der Wiederherstellung das Umsetzen von Einheiten, die einen speziellen typographischen Effekt nach einem ersten Schema spezifizieren, in Einheiten umfasst, die identische typographische Effekte nach einem zweiten Schema spezifizieren.

8. Verfahren nach Anspruch 2, bei dem der Schritt der Umsetzung das Umsetzen von Einheiten, die einen typographischen Effekt nach einem ersten Schema spezifizieren, in Einheiten umfasst, die die identischen typographischen Effekte nach einem zweitem Schema spezifizieren.

9. Verfahren nach Anspruch 1, umfassend die weitere Schritte:
Speichern eines Satzes von Regeln in einem editierbaren Speicher (5), auf die in dem Schritt der Umsetzung und in dem Schritt der Wiederherstellung zurückgegriffen wird, und die spezifizieren, wie die typographische Effekte spezifizierende Einheiten zu identifizieren und umzusetzen sind; und
Editieren des Satzes der Regeln nach unterschiedlichen Schemata, durch die die typographischen Effekte in unterschiedlichen Typen von elektronischen Dokumenten spezifiziert werden.

10. Dokumentumsetzungssystem zur Umsetzung eines elektronischen Dokuments, das aus Informationseinheiten besteht, unter denen sowohl Einheiten natürlicher Sprache als auch typographische Effekte spezifizierende Einheiten auftreten, um eine Natursprachen-Verarbeitung des elektronischen Dokuments zu ermöglichen, umfassend:
einen Umsetzer (4) zur Umsetzung der typographische Effekte spezifizierenden Einheiten und zum Hinzufügen von typographische Effekte spezifizierenden Einheiten nach Bedarf, so dass jede Einheit, die einen typographischen Effekt spezifiziert, den typographischen Effekt für nur eine Einheit natürlicher Sprache spezifiziert;
eine Verbergungsvorrichtung die an einen Umsetzer (4) gekoppelt ist, um die typographische Effekte spezifizierenden Einheiten, die auf diese Weise konvertiert sind, von dem elektronischen Dokument vor der Natursprachen-Verarbeitung zu entfernen;
einen ersten Speicher (7), der an die Verbergungsvorrichtung (6) gekoppelt ist, um die typographische Effekte spezifizierenden Einheiten zu speichern, die von der Verbergungsvorrichtung (6) entfernt worden sind;
einen zweiten Speicher (5), der mit der Umsetzervorrichtung (4) gekoppelt ist, um Informationen zu speichern, die spezifizieren, wie die Umsetzervorrichtung (4) die typographischen Effekte spezifizierenden Einheiten umsetzen soll.

11. Dokumentumsetzungssystem nach Anspruch 10, ferner umfassend eine Editiervorrichtung 1, durch die ein menschlicher Benutzer die in dem zweiten Speicher (5) gespeicherte Information editieren kann.

12. Dokumentumsetzungssystem nach Anspruch 10, worin der zweite Speicher (5) wenigstens folgendes speichert:
ein erstes Muster von Einheiten, die einen speziellen typographischen Effekt spezifizieren, der durch die Umsetzervorrichtung (4) in dem elektronischen Dokument wieder erkannt werden soll;
ein zweites Muster von Einheiten, in die die Umsetzervorrichtung (4) das erste Muster der Einheiten umsetzt.

13. Dokumentumsetzungssystem nach Anspruch 10, ferner umfassend:
eine Wiederherstellungsvorrichtung (11), die mit dem zweiten Speicher (5) gekoppelt ist, um die typographische Effekte spezifizierenden Einheiten von dem ersten Speicher (7) in das elektronische Dokument nach der Natursprachen-Verarbeitung wiederherzustellen, wobei
der zweite Speicher (5) auch Informationen speichert, durch die die Wiederherstellungsvorrichtung (10) entscheidet, wie die typographische Effekte spezifizierenden Einheiten in das Dokument wiederherzustellen sind.

14. Dokumentumsetzungssystem nach Anspruch 13, worin die Natursprachen-Verarbeitung eine Maschinenübersetzung von den Einheiten natürlicher Sprache von einer natürlichen Sprache in eine andere natürliche Sprache umfasst.

15. Dokumentumsetzungssystem nach Anspruch 13, worin die Wiederherstellungsvorrichtung 11, nach der Wiederherstellung der typographische Effekte spezifizierenden Einheiten die Einheiten von dem elektronischen Dokument entfernt, die redundante typographische Effekte spezifizieren.

16. Dokumentumsetzungssystem nach Anspruch 13, worin der zweite Speicher (5) wenigsten folgendes speichert:
ein drittes Muster von typographische Effekte spezifizierenden Einheiten, die von der Wiederherstellungsvorrichtung (11) in dem elektronischen Dokument erkannt werden sollen; und
ein viertes Muster von Einheiten, in die die Wiederherstellungsvorrichtung (11) das dritte Muster der Einheiten umsetzt.

17. Dokumentumsetzungssystem zum Umsetzen eines elektronischen Dokuments bestehend aus Informationseinheiten, unter denen sowohl Einheiten natürlicher Sprache als auch typographische Effekte spezifizierende Einheiten auftreten, um eine Natursprachen-Verarbeitung des elektronischen Dokuments zu ermöglichen, umfassend:
eine Unterscheidungsvorrichtung (14) zum Entfernen der typographische Effekte spezifizierenden Einheiten von dem elektronischen Dokument und zum Einfügen von Hilfsinformationen, die entsprechende typographische Effekte spezifizieren, an jede einzelne Einheit natürlicher Sprache, auf die die typographischen Effekte zutreffen, vor der Natursprachen-Verarbeitung, wobei die Hilfsinformationen gegenüber der Natursprachen-Verarbeitung verborgen wird und während der Natursprachen-Verarbeitung unbeeinflußt bleibt;
einen Speicher (16), der mit der Unterscheidungsvorrichtung (14) gekoppelt ist und Informationen speichert, durch die die Unterscheidungsvorrichtung (14) die typographische Effekte spezifizierenden Einheiten wiedererkennt und die Hilfsinformationen auswählt, die die entsprechenden typographischen Effekte spezifiziert.

18. Dokumentumsetzungssystem nach Anspruch 17, ferner umfassend eine Editiervorrichtung (1), durch die ein menschlicher Benutzer die in den Speicher (16) gespeicherten Informationen editieren kann.

19. Dokumentumsetzungssystem nach Anspruch 17 ferner umfassend:
eine Integratorvorrichtung (15), die mit dem Speicher (16) gekoppelt ist, um typographische Effekte spezifizierende Einheiten zu dem elektronischen Dokument nach der Natursprachen-Verarbeitung in Antwort auf die Hilfsinformation hinzuzufügen, die durch die Unterscheidungsvorrichtung (14) hinzugefügt wurden, wobei
der Speicher (16) auch Informationen speichert, durch die die Integratorvorrichtung (15) entscheidet, welche typographische Effekte spezifizierenden Einheiten in Antwort auf Hilfsinformationen die sie hinzufügen soll.

20. Dokumentumsetzungssystem nach Anspruch 19, worin die Integratorvorrichtung (15), wenn ihr eine Einheit natürlicher Sprache mit bestimmten Hilfsinformationen präsentiert wird, eine Einheit, die einen entsprechenden speziellen Effekt unmittelbar vor der Einheit natürlicher Sprache startet, und eine Einheit hinzufügt, die den entsprechenden speziellen Effekt unmittelbar nach der Einheit natürlicher Sprache beendet.

21. Dokumentumsetzungssystem nach Anspruch 19, worin die Natursprachen-Verarbeitung eine Maschinenübersetzung der Einheit natürlicher Sprache von einer natürlichen Sprache in eine andere natürliche Sprache umfasst.

22. Dokumentumsetzungssystem nach Anspruch 19, worin der Speicher (16) wenigstens folgendes speichert:
ein Muster von Einheiten, die einen speziellen typographischen Effekt spezifizieren, der von der Unterscheidungsvorrichtung (14) erkannt werden soll;
entsprechende Hilfsinfbrmationen;
ein Paar von einen typographischen Effekt spezifizierenden Einheiten, die von der Integratorvorrichtung (15) vor und nach der Einheit natürlicher Sprache, die die entsprechenden Hilfsinformation hat, hinzugefügt werden soll.

23. Dokumentumsetzungssystem nach Anspruch 19 worin die Intergratorvorrichtung (15) nach dem Hinzufügen der typographische Effekte spezifizierenden Einheiten, die redundanter Einheiten, die typographische Effekte spezifizieren, löscht.

## Revendications

1. Procédé de conversion d'un document électronique comportant des informations incorporées spécifiant des effets typographiques, comprenant les étapes consistant à :
décomposer ledit document électronique en unités d'informations, parmi lesquelles se trouvent à la fois des unités en langue naturelle et des unités spécifiant des effets typographiques,
convertir les unités spécifiant des effets typographiques de manière à ce que chaque unité spécifiant un effet typographique spécifie cet effet typographique uniquement pour une unité en langue naturelle, des unités supplémentaires spécifiant des effets typographiques qui sont ajoutés à la demande, et
masquer les unités spécifiant des effets typographiques, telles qu'elles sont ainsi converties en
retirant lesdites unités spécifiant des effets typographiques dudit document électronique, et
mémorisant lesdites unités spécifiant des effets typographiques séparément dudit document électronique,
rattachant des informations d'attributs spécifiant des effets typographiques correspondants auxdites unités en langue naturelle.

2. Procédé selon la revendication 1, comprenant les étapes supplémentaires consistant à :
traiter lesdites unités en langue naturelle pour produire un document en langue naturelle traité, et
rétablir les unités spécifiant des effets typographiques, telles qu'elles sont masquées ci-dessus, dans ledit document traité en langue naturelle.

3. Procédé selon la revendication 2, dans lequel ladite étape de traitement desdites unités en langue naturelle comprend une traduction à la machine desdites unités en langue naturelle d'une langue naturelle à une langue naturelle différente.

4. Procédé selon la revendication 2, comprenant l'étape supplémentaire consistant à éliminer des unités redondantes spécifiant des effets typographiques dudit document traité en langue naturelle, après ladite étape de rétablissement.

5. Procédé selon la revendication 2, dans lequel ladite étape de rétablissement comprend la conversion d'unités spécifiant un effet typographique particulier en unités spécifiant un effet typographique différent.

6. Procédé selon la revendication 2, dans lequel ladite étape de conversion comprend la conversion d'unités spécifiant un effet typographique particulier en unités spécifiant un effet typographique différent.

7. Procédé selon la revendication 2, dans lequel ladite étape de rétablissement comprend la conversion d'unités spécifiant des effets typographiques selon un premier principe en unités spécifiant des effets typographiques identiques conformément à un second principe.

8. Procédé selon la revendication 2, dans lequel ladite étape de conversion comprend la conversion d'unités spécifiant des effets typographiques selon un premier principe en unités spécifiant des effets typographiques identiques conformément à un second principe.

9. Procédé selon la revendication 1, comprenant les étapes supplémentaires consistant à :
mémoriser, dans une mémoire permettant une édition (5), un ensemble de règles auxquelles il est fait référence dans ladite étape de conversion et dans ladite étape de rétablissement, spécifiant comment lesdites unités spécifiant des effets typographiques doivent être identifiées et converties, et
éditer ledit ensemble de règles conformément à des principes différents selon lesquels lesdits effets typographiques sont spécifiés dans des types différents de documents électroniques.

10. Système de conversion de document destiné à convertir un document électronique constitué d'unités d'informations, parmi lesquelles à la fois des unités en langue naturelle et des unités spécifiant des effets typographiques apparaissent, afin de permettre un traitement en langue naturelle du document électronique, comprenant :
un convertisseur (4) destiné à convertir lesdites unités spécifiant des effets typographiques, et à ajouter des unités spécifiant des effets typographiques à la demande, de manière à ce que chaque unité spécifiant un effet typographique spécifie ledit effet typographique uniquement pour une unité en langue naturelle,
un module de masquage (6), relié audit convertisseur (4), destiné à retirer les unités spécifiant des effets typographiques, telles qu'elles sont ainsi converties, dudit document électronique avant ledit traitement en langue naturelle,
une première mémoire (7), reliée audit module de masquage (6), afin de mémoriser les unités spécifiant des effets typographiques enlevées par ledit module de masquage (6), et
une seconde mémoire (5), reliée audit convertisseur (4), mémorisant des informations spécifiant comment ledit convertisseur (4) doit convertir lesdites unités spécifiant des effets typographiques.

11. Système de conversion de document selon la revendication 10, comprenant également un moyen d'édition (1) grâce auquel un utilisateur humain peut éditer les informations mémorisées dans ladite seconde mémoire (5).

12. Système de conversion de document selon la revendication 10, dans lequel ladite seconde mémoire (5) mémorise au moins :
une première séquence d'unités spécifiant un effet typographique particulier devant être reconnu par ledit convertisseur (4) dans ledit document électronique, et
une seconde séquence d'unités en laquelle ledit convertisseur (4) convertit ladite première séquence d'unités.

13. Système de conversion de document selon la revendication 10, comprenant en outre :
un module de rétablissement (11), relié à ladite seconde mémoire (5), afin de rétablir les unités spécifiant des effets typographiques de ladite première mémoire (7) dans ledit document électronique après ledit traitement en langue naturelle, dans lequel
ladite seconde mémoire (5) mémorise également des informations grâce auxquelles ledit module de rétablissement (11) définit comment rétablir les unités spécifiant des effets typographiques dans ledit document électronique.

14. Système de conversion de document selon la revendication 13, dans lequel ledit traitement en langue naturelle comprend une traduction à la machine desdites unités en langue naturelle d'une langue naturelle à une langue naturelle différente.

15. Système de conversion de document selon la revendication 13, dans lequel, après le rétablissement desdites unités spécifiant des effets typographiques, ledit module de rétablissement (11) enlève des unités spécifiant des effets typographiques redondants dudit document électronique.

16. Système de conversion de document selon la revendication 13, dans lequel ladite seconde mémoire (5) mémorise au moins :
une troisième séquence d'unités spécifiant des effets typographiques devant être reconnus par ledit module de rétablissement (11) dans ledit document électronique, et
une quatrième séquence d'unités en laquelle ledit module de rétablissement (11) convertit ladite troisième séquence d'unités.

17. Système de conversion de document destiné à convertir un document électronique constitué d'unités d'informations, parmi lesquelles à la fois des unités en langue naturelle et des unités spécifiant des effets typographiques apparaissent, afin de permettre un traitement en langue naturelle du document électronique, comprenant :
un module de différenciation (14) destiné à enlever les unités spécifiant des effets typographiques dudit document électronique, et à rattacher des informations auxiliaires spécifiant des effets typographiques correspondants à chaque unité individuelle en langue naturelle à laquelle s'appliquent les effets typographiques, avant ledit traitement en langue naturelle, lesdites informations auxiliaires étant masquées par rapport audit traitement en langue naturelle et non affectées par ledit traitement en langue naturelle, et
une mémoire (16) reliée audit module de différenciation (14), mémorisant des informations grâce auxquelles ledit module de différenciation (14) reconnaît lesdites unités spécifiant des effets typographiques et sélectionne lesdites informations auxiliaires spécifiant des effets typographiques correspondants.

18. Système de conversion de document selon la revendication 17, comprenant également un moyen d'édition (1) grâce auquel un utilisateur humain peut éditer les informations mémorisées dans ladite mémoire (16).

19. Système de conversion de document selon la revendication 17, comprenant en outre :
un module d'intégration (15) relié à ladite mémoire (16), destiné à ajouter des unités spécifiant des effets typographiques audit document électronique après ledit traitement en langue naturelle, en réponse aux informations auxiliaires rattachées par ledit module de différenciation (14), dans lequel
ladite mémoire (16) mémorise également des informations grâce auxquelles ledit module d'intégration (15) définit quelles unités ajouter spécifiant des effets typographiques, en réponse auxdites informations auxiliaires.

20. Système de conversion de document selon la revendication 19, dans lequel, lorsqu'il reçoit une unité en langue naturelle présentant certaines informations auxiliaires, ledit module d'intégration (15) ajoute une unité débutant un effet spécial correspondant juste avant ladite unité en langue naturelle, et ajoute une unité mettant fin à l'effet spécial correspondant juste après ladite unité en langue naturelle.

21. Système de conversion de document selon la revendication 19, dans lequel ledit traitement en langue naturelle comprend une traduction à la machine desdites unités en langue naturelle d'une langue naturelle à une langue naturelle différente.

22. Système de conversion de document selon la revendication 19, dans lequel ladite mémoire (16) mémorise au moins :
une séquence d'unités spécifiant un effet typographique particulier devant être reconnu par ledit module de différenciation (14),
des informations auxiliaires correspondantes, et
une paire d'unités spécifiant un effet typographique, devant être ajoutée par ledit module d'intégration (15) avant et après chaque unité en langue naturelle comportant lesdites informations auxiliaires correspondantes.

23. Système de conversion de document selon la revendication 19, dans lequel, après l'addition desdites unités spécifiant des effets typographiques, ledit module d'intégration (15) supprime des unités redondantes spécifiant des effets typographiques.
